# EUROPÄISCHE PATENTSCHRIFT

(11) **EP 2 980 366 B1**
(45) Veröffentlichungstag und Bekanntmachung des Hinweises auf die Patenterteilung: **08.04.2020**
(21) Anmeldenummer: 15176353.9
(22) Anmeldetag: 10.07.2015
(51) Int. Cl.: F01D 17/16, F01D 9/04, F04D 29/56

(54) **GEHÄUSE FÜR EINE GASTURBINE, FLUGTRIEBWERK SOWIE EIN VERFAHREN ZUM BETREIBEN EINER GASTURBINE**
HOUSING FOR A GAS TURBINE, AIRCRAFT ENGINE AND A METHOD FOR OPERATING A GAS TURBINE
BOÎTIER POUR UNE TURBINE À GAZ, GROUPE MOTOPROPULSEUR ET PROCÉDÉ DE FONCTIONNEMENT D'UNE TURBINE À GAZ

(30) Priorität: 30.07.2014 DE 102014214915
(43) Veröffentlichungstag der Anmeldung: 03.02.2016
(73) Patentinhaber: MTU Aero Engines AG, 80995 München (DE)
(72) Erfinder: Böck, Alexander, 82288 Kottgeisering (DE); Malzacher, Franz, 82194 Gröbenzell (DE)

(56) Entgegenhaltungen:
- EP-A1- 2 407 673
- WO-A1-2007/045874
- US-A- 5 873 700

## Beschreibung

Die Erfindung betrifft ein Gehäuse für eine Gasturbine gemäß dem Oberbegriff des Patentanspruchs 1. Ein gattungsbildendes Gehäuse ist aus der EP 2 407 673 A1 bekannt. Weiterhin betrifft die Erfindung eine Gasturbine sowie ein Verfahren zum Betreiben einer Gasturbine.

Aus dem Stand der Technik sind Gasturbinen mit variabel einstellbaren Leitschaufeln bekannt. Üblicherweise sind Leitschaufeln an einem Gehäuse der Gasturbine zum Einstellen drehbar gelagert, wobei die Schaufelblätter der Leitschaufeln in einem Strömungskanal des Gehäuses der Gasturbine angeordnet sind. Variabel einstellbare Leitschaufeln in einer Gasturbine ermöglichen insbesondere die Anpassung der Schluckfähigkeit einer Turbine sowie die gezielte Anpassung der Anströmung von nachfolgenden Rotoren. Dadurch kann eine Gasturbine für unterschiedliche Betriebspunkte besonders gut eingestellt werden, was den Treibstoffverbrauch senkt.

Aus der US 2 919 809 ist ein Gehäuse für eine Gasturbine bekannt, welches neben variabel einstellbaren Leitschaufeln mehrere Wandungselemente umfasst, die beweglich am Gehäuse gelagert und über eine Feder mit einer in Richtung des Strömungskanals gerichteten Kraft beaufschlagt sind. Hierdurch können unterschiedliche thermische Expansionen der verschiedenen Gehäuseelemente und der Leitschaufeln kompensiert werden.

Als nachteilig an den bekannten Gehäusen ist jedoch der Umstand anzusehen, dass zwischen den Schaufelblättern der Leitschaufeln und dem angrenzenden Wandungselement stets ein ausreichend großer Spalt vorgesehen sein muss, um neben einem Toleranzausgleich auch die Verstellbarkeit der Leitschaufeln während des Betriebs der zugeordneten Gasturbine sicherzustellen. Dieser Spalt, der auch als Fahnenspalt bezeichnet wird, führt zu sogenannten Drosselverlusten. Diese Drosselverluste senken den Wirkungsgrad und bewirken einen erhöhten Treibstoffverbrauch der Gasturbine. Im ungünstigsten Fall kann dieser erhöhte Treibstoffverbrauch sogar eine durch das variable Einstellen der Leitschaufel erzielbare Reduktion des Treibstoffverbrauchs überkompensieren und die Verstellbarkeit der Leitschaufel damit überflüssig machen.

Aufgabe der vorliegenden Erfindung ist es, ein Gehäuse für eine Gasturbine zu schaffen, welches einerseits eine zuverlässige Leitschaufelverstellung und andererseits einen verbesserten Wirkungsgrad einer zugeordneten Gasturbine ermöglicht. Eine weitere Aufgabe der Erfindung besteht darin, eine Gasturbine mit einem derartigen Gehäuse sowie ein Verfahren zum Betreiben einer Gasturbine mit einem solchen Gehäuse bereitzustellen.

Diese Aufgaben werden erfindungsgemäß durch ein Gehäuse mit den Merkmalen des Patentanspruchs 1, eine Gasturbine mit den Merkmalen des Patentanspruchs 12 sowie durch ein Verfahren gemäß Patentanspruch 13 zum Betreiben einer Gasturbine gelöst. Vorteilhafte Ausgestaltungen mit zweckmäßigen Weiterbildungen der Erfindung sind in den übrigen Patentansprüchen angegeben.

Ein erster Aspekt der Erfindung betrifft ein Gehäuse für eine Gasturbine. Um einerseits eine zuverlässige Leitschaufelverstellung und andererseits einen verbesserten Wirkungsgrad einer zugeordneten Gasturbine zu ermöglichen, ist es erfindungsgemäß vorgesehen, dass das Wandungselement zwischen einer Dichtstellung, in welcher das Wandungselement zumindest an einem Teilbereich einer dem Wandungselement zugewandten Seite eines Schaufelblatts der Leitschaufel anliegt, und einer Offenstellung, in welcher das Schaufelblatt und das Wandungselement voneinander beabstandet sind, bewegbar ist. Mit anderen Worten ist es erfindungsgemäß vorgesehen, dass das Wandungselement einerseits in eine Offenstellung bewegbar ist, in welcher ein ausreichend großer Spalt zwischen dem Wandungselement und dem Schaufelblatt der Leitschaufel ausgebildet ist, um die Leitschaufel verstellen zu können. Andererseits ist es vorgesehen, dass das Wandungselement in eine Dichtstellung bewegbar ist, in welcher die dem Wandungselement zugewandte Seite des Schaufelblatts der Leitschaufel zumindest teilweise am Wandungselement anliegt. In der Dichtstellung ist der Fahnenspalt damit teilweise, überwiegend oder vollständig geschlossen, wodurch entsprechende Drosselverluste während des Betriebs der zugeordneten Gasturbine stark reduziert oder vollständig vermieden werden. Somit wird einerseits der Wirkungsgrad der zugeordneten Gasturbine verbessert, während andererseits die Verstellbarkeit der Leitschaufel weiterhin sichergestellt ist. Im Gegensatz zu einer schleifenden Dichtung, die beispielsweise mittels Borsten, Schiebern oder dergleichen realisiert werden könnte, kommt es darüber hinaus nicht zu einem Verschleiß am verstellbaren Schaufelblatt oder dem Wandungselement. Somit ist das erfindungsgemäße Gehäuse besonders wartungsarm. Zusätzlich ist keine strukturelle oder aerodynamische Veränderung der Leitschaufel nötig, welche deren Lebensdauer oder Wirkung auf den Gasstrom nachteilig beeinflussen könnte. Die verstellbare Leitschaufel kann dabei grundsätzlich als Turbinenleitschaufel oder als Verdichterleitschaufel ausgebildet sein. Weiterhin können grundsätzlich mehrere verstellbare Leitschaufeln vorgesehen sein, die nebeneinander in Umfangsrichtung des Gehäuses zu einem Leitschaufelkranz angeordnet sind. Die verstellbaren Leitschaufeln können dabei auch zu Leitschaufelsegmenten zusammengefasst sein. Analog können mehrere verstellbare Wandungselemente, die auch als Ringraumsegmente bezeichnet werden können, nebeneinander in Umfangsrichtung des Gehäuses zu einem kompletten, den Strömungskanal radial nach außen begrenzenden Ring angeordnet sein.

Erfindungsgemäß ist es vorgesehen, dass das Wandungselement zum Bewegen zwischen der Offenstellung und der Dichtstellung mit einem unter Druck stehenden Fluid beaufschlagbar ist. Zu diesem Zweck kann beispielsweise das Wandungselement zusammen mit weiteren Gehäuseelementen einen mit Druck beaufschlagbaren Hohlraum begrenzen. Unter Druck stehende Fluide können bei Gasturbinen ohne besonderen Aufwand erzeugt werden. Beispielsweise kann als Fluid Druckluft in Form von sogenannter Zapfluft aus einer Verdichterstufe der Gasturbine abgezapft werden. Das Abzapfen von Zapfluft beziehungsweise Druckluft aus dem Verdichter von Gasturbinen ist an sich bekannt und bei vielen Flugtriebwerken bereits vorgesehen. Bei einem Einsatz der Gasturbine in einem Flugtriebwerk steht, ab einer gewissen Geschwindigkeit eines Flugzeugs, Helikopters oder dergleichen außerdem ein genügender hoher Luftdruck in Form von Staudruck zur Verfügung. Entsprechend kann das Wandungselement besonders einfach und besonders kostengünstig mit Druck beaufschlagt werden. Die Anzahl der beweglichen Teile, insbesondere im Gegensatz zu beispielsweise der Verwendung eines Aktuators, ist dabei besonders gering. Damit kann das Gehäuse und damit auch eine mit dem Gehäuse versehene Gasturbine besonders wartungsarm und leicht ausgebildet sein. Dies ist insbesondere im Flugzeugbau von großer Bedeutung. Alternativ kann bei der Verwendung eines hydraulischen Aktuators das ebenfalls üblicherweise beispielsweise bereits bei Flugzeugen vorgesehen hydraulische System genutzt werden.

Besonders vorteilhaft für die Erfindung ist es, wenn das Gehäuse eine Druckzuleitung zum Zuführen des unter Druck stehenden Fluids und eine Druckableitung zum Abführen des unter Druck stehenden Fluids umfasst. Über die Druckzuleitung kann der Druck auf das Wandungselement durch Zuführen des unter Druck stehenden Fluids dementsprechend erhöht werden, während der Druck auf das Wandungselement durch Ablassen des Fluids über die Druckableitung entsprechend verringert werden kann. Die Druckzuleitung kann beispielsweise einen Kanal zu einer der Verdichterstufen der Gasturbine bilden. Alternativ kann die Druckzuleitung einen Kanal zu der Umgebung der Gasturbine bilden, sodass das Wandungselement mit dem Umgebungsdruck beaufschlagt werden kann. Alternativ ist es beispielsweise auch möglich, dass die Druckzuleitung eine Durchgangsöffnung in einem Flugtriebwerk ist, mittels welcher das Wandungselement mit dem durch die Bewegung des Flugzeugs, Helikopters oder dergleichen erzeugten Staudruck beaufschlagt werden kann. In vorteilhafter Weise wird durch einen erhöhten Druck eine Bewegung des Wandungselements in die Dichtstellung bewirkt, sodass der Fahnenspalt während des Betriebs einer zugeordneten Gasturbine standardmäßig zumindest größtenteils geschlossen ist. Die Bewegung des Wandungselements in die Offenstellung wird in diesem Fall durch eine relative Druckreduzierung bzw. durch ein Ableiten des unter Druck stehenden Fluids bewirkt. Die Druckableitung kann beispielsweise in die Umgebung führen. Diese Bewegung kann durch einen Druck im Strömungskanal unterstützt werden, welcher auf das Wandungselement wirkt. Es ist aber auch möglich, dieses Wirkprinzip umzukehren, sodass eine ausreichend Druckerhöhung eine Bewegung des Wandungselements in die Offenstellung bewirkt, während eine Druckemiedrigung eine Bewegung des Wandungselements in die Dichtstellung bewirkt. Somit kann mit technisch besonders einfachen und kostengünstigen Mitteln das Bewegen des Wandungselements zwischen der Dichtstellung und der Offenstellung bewirkt werden.

In einer weiteren vorteilhaften Ausgestaltung der Erfindung ist vorgesehen, dass die Druckzuleitung und/oder die Druckableitung ein Ventil umfasst, mittels welchem der Druck auf das Wandungselement steuerbar und/oder regelbar ist. Dies ermöglicht eine besonders präzise Steuerung und/oder Regelung der Bewegung des Wandungselements zwischen der Dichtstellung und der Offenstellung. Die Steuerung bzw. Regelung des Ventils kann in Abhängigkeit von Betriebsparametern der Gasturbine erfolgen. Hierzu kann das Ventil beispielsweise mit einer Steuer- und/oder Regeleinrichtung der Gasturbine gekoppelt sein.

In besonders vorteilhafter Ausgestaltung der Erfindung ist es vorgesehen, dass ein Abblasskanal der Druckableitung einen größeren Querschnitt aufweist als ein Zugangskanal der Druckzuleitung. Der größere Querschnitt des Abblasskanals ermöglicht eine besonders schnelle Druckverminderung und damit eine besonders schnelle Bewegung des Wandungselements zwischen der Offen- und der Dichtstellung. Außerdem ist es hierdurch möglich, nur ein Ventil an der Druckableitung zu verwenden und somit die Anzahl der Teile sowie das Gewicht des Gehäuses möglichst gering zu halten. Wenn das Ventil geöffnet wird, kann über die Druckableitung aufgrund des größeren Querschnitts des Abblasskanals mehr Fluid abgeführt werden als über die Druckzuleitung gleichzeitig zugeführt werden kann, wodurch eine schnelle Druckreduzierung erreicht wird.

Weiterhin hat es sich als vorteilhaft gezeigt, wenn das Wandungselement über eine Lagerung einseitig an einem Gehäuseelement gehalten ist. Die Lagerung reduziert wenigstens einen der Freiheitsgerade des beweglichen Wandungselements. Das Wandungselement kann über die Lagerung relativ zum angrenzenden Gehäuseelement bewegt und beispielsweise zwischen der Dichtstellung und der Offenstellung verschwenkt oder verbogen werden.

In einer besonders vorteilhaften Ausgestaltung der Erfindung ist es vorgesehen, dass zwischen dem Wandungselement und einem angrenzenden Gehäuseelement wenigstens ein Dichtungselement angeordnet ist. Dies ermöglicht eine zuverlässige Abdichtung eines Spalts zwischen dem Wandungselement und dem angrenzenden Gehäuseelement. Solch ein Spalt kann insbesondere bei einem Bewegen des Wandungselements zwischen der Dichtstellung und der Offenstellung entstehen. Mittels des Dichtungselements können Druckverluste im Strömungskanal besonders zuverlässig verhindert werden, sodass die Effizienz der Gasturbine unabhängig von der Stellung des Wandungselements gesteigert ist. Das Dichtungselement kann dabei so angeordnet sein, dass das Wandungselement bei einem Bewegen zwischen der Dichtstellung und der Offenstellung an dem Dichtungselement entlang gleitet. Alternativ kann das Dichtungselement auch an dem bewegbaren Wandungselement befestigt sein und an dem anderen Gehäuseelement entlang gleiten.

Weitere Vorteile ergeben sich, indem eine den Strömungskanal begrenzende Fläche des Wandungselements und ein Schaufelteller der Leitschaufel in der Dichtstellung zumindest im Wesentlichen bündig aneinander anschließen. Die dem Strömungskanal zugewandte Seite des Schaufeltellers und die den Strömungskanal begrenzende Seite des Wandungselements bilden somit aerodynamisch gesehen eine im Wesentlichen glatte Fläche. Dadurch werden am Übergang zwischen dem Schaufelteller und dem Wandungselement besonders wenige unerwünschte Verwirbelungen im Gasstrom induziert. Der Schaufelteller und das Wandungselement bilden in Dichtstellung. Ein kleiner Spalt zwischen dem Schaufelteller und dem Wandungselement kann dabei grundsätzlich bestehen bleiben.

In weiterer vorteilhafter Ausgestaltung der Erfindung ist es vorgesehen, dass das Wandungselement eine Öffnung umfasst, in welcher der Schaufelteller der Leitschaufel angeordnet ist. Dabei ist zwischen dem Schaufelteller und der Öffnung vorzugsweise eine Spielpassung vorgesehen, sodass die Leitschaufel und das Wandungselement relativ zueinander bewegbar sind. Damit kann das Wandungselement als Führung für die verstellbare Leitschaufel dienen. Umgekehrt kann der Schaufelteller als Führung beim Verstellen des Wandungselements zwischen der Offen- und der Dichtstellung dienen.

In weiterer vorteilhafter Ausgestaltung der Erfindung ist es vorgesehen, dass das Wandungselement und die Leitschaufel in der Dichtstellung reibschlüssig aneinander festgelegt sind. Das heißt, dass das Wandungselement in der Dichtstellung eine solche Normal-Kraft auf die in Anlage gebrachte Seite des Leitschaufelblatts ausübt, dass eine relative Bewegung der Leitschaufel zumindest unter normalen Betriebsbedingungen einer zugeordneten Gasturbine verhindert ist. Dies ermöglicht eine besonders zuverlässige, reversible Lagesicherung der Leitschaufel, sodass vorteilhaft sogar auf eine zusätzliche Einrichtung zum Festlegen der variabel einstellbaren Leitschaufel verzichtet werden kann.

In weiterer vorteilhafter Ausgestaltung der Erfindung ist es vorgesehen, dass das Gehäuse wenigstens ein Anschlagelement umfasst, welches die Bewegung des Wandungselements in die Dichtstellung und/oder in die Offenstellung begrenzt. Das oder die Anschlagelemente stellen eine konstruktiv einfache und betriebssichere Möglichkeit dar, die relative Bewegung des Wandungselements, insbesondere ein Verschwenken, Rotieren und/oder Verbiegen, gegenüber den angrenzenden Gehäuseelementen zu beschränken. Damit werden auch die an das Wandungselement angrenzenden Gehäuseelemente besonders gut vor Beschädigungen durch eine unzulässige Bewegung des Wandungselements geschützt.

Ein zweiter Aspekt der Erfindung betrifft eine Gasturbine, insbesondere Flugtriebwerk, mit einem Gehäuse nach einem der vorhergehenden Ausführungsbeispiele. Die sich hieraus ergebenden Merkmale und deren Vorteile sind den Beschreibungen des ersten Erfindungsaspekts zu entnehmen, wobei vorteilhafte Ausgestaltungen des ersten Erfindungsaspektes als vorteilhafte Ausgestaltungen des zweiten Erfindungsaspekts anzusehen sind.

Ein dritter Aspekt der Erfindung betrifft ein Verfahren zum Betreiben einer Gasturbine mit einem Gehäuse gemäß dem ersten Erfindungsaspekt. Um einerseits eine zuverlässige Leitschaufelverstellung und andererseits einen verbesserten Wirkungsgrad der Gasturbine zu ermöglichen, ist es erfindungsgemäß vorgesehen, dass das Wandungselement zwischen der Dichtstellung und der Offenstellung bewegt wird. Die sich hieraus ergebenden Merkmale und deren Vorteile sind den Beschreibungen des ersten Erfindungsaspekts zu entnehmen, wobei vorteilhafte Ausgestaltungen des ersten Erfindungsaspektes als vorteilhafte Ausgestaltungen des zweiten Erfindungsaspekts anzusehen sind.

In einer vorteilhaften Ausgestaltung des Verfahrens ist es vorgesehen, dass das Wandungselement zunächst in die Offenstellung bewegt wird. Dadurch wird der Spalt zwischen der dem Wandungselement zugewandten Seite des Schaufelblatts der einstellbaren Leitschaufel und dem Wandungselement freigegeben. In einem zweiten Schritt wird dann die Leitschaufel verstellt. Anschließend wird dann das Wandungselement wieder in die Dichtstellung bewegt, wodurch der Fahnenspalt zwischen dem Wandungselement und der dem Wandungselement zugewandten Seite des Schaufelblatts der verstellbaren Leitschaufel zumindest überwiegend wieder verschlossen wird. Damit ist es insbesondere möglich, das Wandungselement lediglich so lange in die Offenstellung zu bewegen und dort zu halten, wie für die gewünschte Einstellung der Leitschaufel notwendig. Anschließend kann das Wandungselement wieder unmittelbar in die Dichtstellung bewegt werden, um den Fahnenspalt zumindest im Wesentlichen wieder zu verschließen. Damit können Drosselverluste und somit auch der Treibstoffverbrauch der Gasturbine vorteilhaft minimiert werden.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1: eine schematische Schnittansicht durch ein Gehäuse für eine Gasturbine, welches wenigstens ein bewegbares Wandungselement und wenigstens eine variabel einstellbare Leitschaufel umfasst; und
- Fig. 2: eine vergrößerte Detailansicht des in Fig. 1 gezeigten Gehäuses.

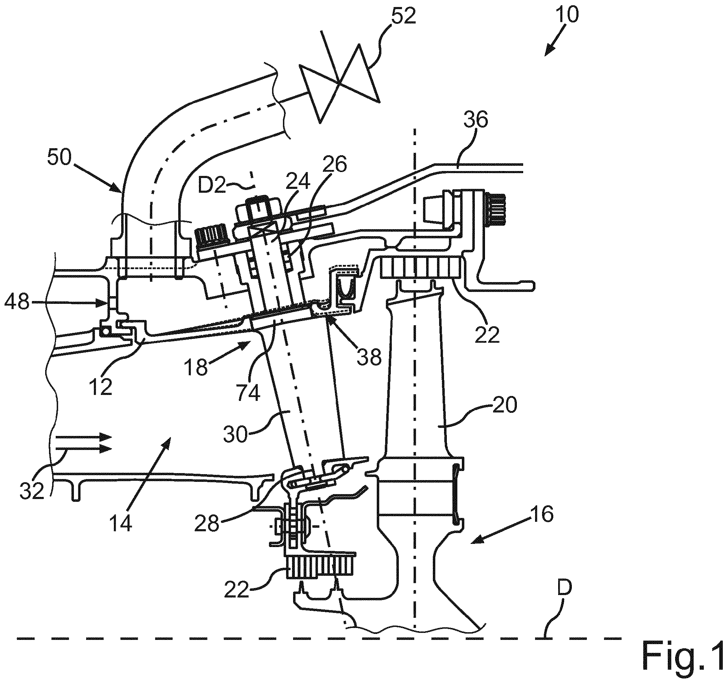

Fig. 1 zeigt in einer schematischen Schnittansicht einen Ausschnitt eines Gehäuses 10 für eine Gasturbine. An dem Gehäuse 10 ist wenigstens ein Wandungselement 12 beweglich gelagert. Dieses Wandungselement 12 begrenzt einen Strömungskanal 14 in radialer Richtung einer Drehachse D eines Rotors 16 der Gasturbine nach außen hin. Weiterhin umfasst das Gehäuse 10 mehrere variabel einstellbare Leitschaufeln 18. Die Darstellung in Fig. 1 ist dabei so zu verstehen, dass das Gehäuse 10 im Wesentlichen rotationssymmetrisch zur Drehachse D aufgebaut ist.

Bei der gezeigten Gasturbine handelt es sich um ein Flugtriebwerk, also um ein Triebwerk zum Beispiel für ein Flugzeug, einen Helikopter, eine unbemannte Drohne oder einem anderen fliegenden Gerät. Ein Einsatz in einem Schiff ist aber ebenso denkbar, genauso wie eine stationäre Verwendung zur Energieerzeugung. Eine weitere beispielhafte Möglichkeit ist die Verwendung der Gasturbine zur Beaufschlagung einer Gaspipeline mit Druck.

Der in Fig. 1 gezeigte Ausschnitt des Flugtriebwerks zeigt den Bereich des Strömungskanals 14, welcher den Übergang von einer Brennkammer der Gasturbine zu einer Turbine bildet. Ein heißer Gasstrom tritt dabei von der Brennkammer durch den Strömungskanal 14 in die Turbine ein. Der Gasstrom in dem Strömungskanal 14 ist dabei in Fig. 1 durch die Pfeile 32 veranschaulicht. In der Turbine expandiert dieser Gasstrom und treibt dabei den Rotor 16 der Gasturbine an. Damit wird aus diesem Gasstrom mittels des Rotors 16 Energie zurückgewonnen. Diese Energie wird bei einer Gasturbine unter anderem dazu verwendet, mittels einer oder mehrere Wellen einen Verdichter der Gasturbine anzutreiben. Die aus dem Gasstrom zurückgewonnene Energie kann bei einem Flugzeugtriebwerk beispielsweise auch dazu genutzt werden, einen sogenannten Fan anzutreiben.

Der Rotor 16 besteht aus einer Vielzahl von ringförmig um die Drehachse D angeordneten Turbinenschaufeln 20. Der Strömungskanal 14, der auch als Ringraum bezeichnet wird, ist dabei sowohl in radial äußerer als auch innerer Richtung des Rotors 16 durch jeweils ein Dichtungselement 22 abgedichtet.

Um ein optimales Anströmen der Turbinenschaufeln 20 durch den Gasstrom zu gewährleisten, sind die ebenfalls ringförmig um die Drehachse D angeordneten mehreren Leitschaufeln 18 variabel einstellbar. Im gezeigten Beispiel sind die Leitschaufeln 18 mit einem Schaft 24 an dem Gehäuse 10 in radial äußerer Richtung mittels einer Wälzlagerung 26 drehbar gelagert. An ihrem radial inneren Ende sind die Leitschaufeln 18 mit einem weiteren Schaftelement 28 drehbar an dem Gehäuse 10 gelagert. Dabei ist zu erkennen, dass ein Schaufelblatt 30 der Leitschaufel 18 im Strömungskanal 14 angeordnet ist. Durch ein Drehen der Leitschaufel 18 um seine Drehachse D2 kann ein Anstellwinkel dieses Schaufelblatts 30 zu dem Gasstrom 32 in dem Strömungskanal 14 verändert werden. Dieses Einstellen der Leitschaufeln 18 wird im gezeigten Ausführungsbeispiel mittels einer Einstelleinrichtung über einen Hebel 36 bewirkt. Damit kann eine Anströmung der Turbinenschaufeln 20 mit dem Gasstrom aerodynamisch optimiert werden, wodurch der Treibstoffverbrauch der Gasturbine bei verschiedenen Betriebspunkten gesenkt wird.

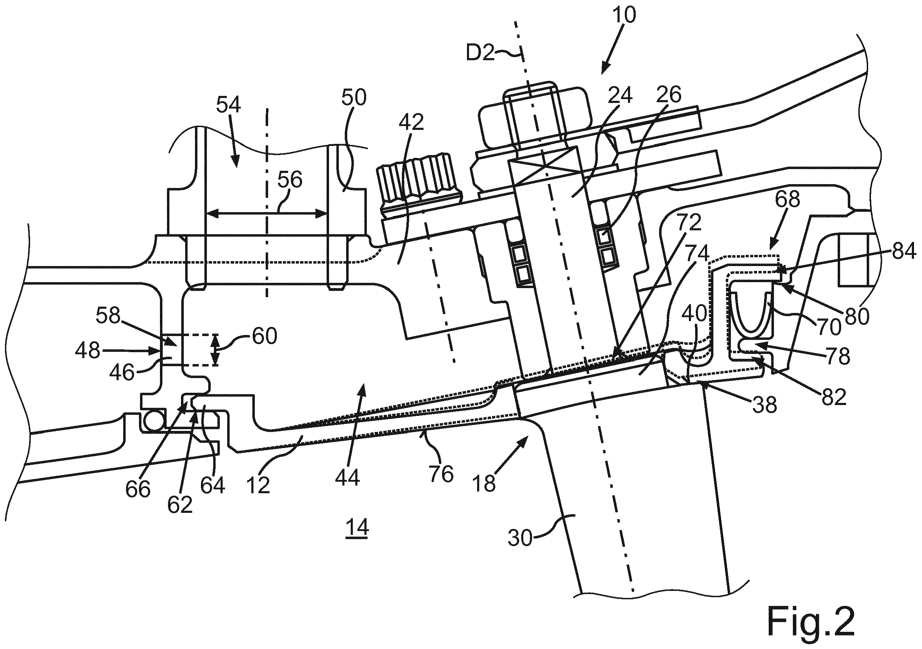

Um die Leitschaufel 18 variabel einstellen zu können, muss zwischen dem Schaufelblatt 30 und dem Wandungselement 12 ein Spalt 38 vorgesehen sein. Dieser Spalt 38 wird auch als Fahnenspalt bezeichnet und ist besonders gut in Fig. 2 zu erkennen. Um den Treibstoffverbrauch der Gasturbine zu senken, soll dieser Fahnenspalt 38 während des Betriebs so gut wie möglich verschlossen werden bzw. sein. Andernfalls treten hier starke Drosselverluste durch Überströmung und Induzierung von Verwirbelungen auf. Daher ist das Wandungselement 12 zwischen einer Dichtstellung, in welcher das Wandungselement 12 zumindest an einem Teilbereich einer dem Wandungselement 12 zugewandten Seite 40 des Schaufelblatts 30 der Leitschaufel 18 anliegt, und einer Offenstellung, in welcher das Schaufelblatt 30 und das Wandungselement 12 voneinander beabstandet sind, bewegbar. Die Dichtstellung des Wandungselements 12 ist in Fig. 2 mit durchgezogenen Linien dargestellt, die Offenstellung mit gestrichelten Linien. Gut zu erkennen ist, wie das Wandungselement 12 in der Dichtstellung an der Seite 40 des Schaufelblatts 30 anliegt, wodurch der Fahnenspalt 38 im Wesentlichen geschlossen ist.

Das Wandungselement 12 ist zum Bewegen zwischen der Dichtstellung und der Offenstellung mit einem Druck beaufschlagbar. Zu diesem Zweck begrenzen das Wandungselement 12 und ein angrenzendes Gehäuseelement 42 einen Hohlraum 44. Der Hohlraum 44 wird auch als Kavität bezeichnet. Dieser Hohlraum 44 wird über eine als Bohrung 46 ausgebildete Druckzuleitung 48 mit Druck versorgt. Der Druck kann durch Stauluft erzeugt werden, welche bei der Bewegung eines Flugzeugs, Helikopters oder dergleichen entsteht. Alternativ kann für die Druckbeaufschlagung des Hohlraums 44 auch Zapfluft aus einer Kompressorstufe der Gasturbine genutzt werden, wobei die Kompressorstufe auch als Verdichterstufe bezeichnet wird. Dieser Druck im Hohlraum 44 übt eine Stellkraft auf das Wandungselement 12 aus, sodass dieses gegen die Seite 40 des Schaufelblatts 30 bewegt beziehungsweise gedrückt wird. Dies entspricht dem Bewegen des Wandungselements 12 in die Dichtstellung. Es wird mit anderen Worten also eine pneumatische Fahnenspaltschließung an der variablen Leitschaufel 18 realisiert. Die Stau- oder Zapfluft kann vorzugsweise zugleich als Kühlluft zur Kühlung des Turbinengehäuses dienen. Sie kann zumindest teilweise als Leckageströmung durch verbleibende Öffnungen bzw. Spalte zum Heißgas- bzw. Strömungskanal 14 in diesen hinein aus dem Hohlraum 44 austreten, um dadurch zu verhindern, dass Heißgas aus dem Heißgas- bzw. Strömungskanal 14 durch die Öffnungen bzw. Spalte in den Hohlraum 44 eingesogen wird. Da das Wandungselement 12 gemäß der vorliegenden Erfindung zwischen der Dichtstellung und der Offenstellung beweglich ausgebildet ist, die Leitschaufel 18 jedoch, abgesehen von einer möglichen Drehung um ihre Drehachse D2, ortsfest relativ zum restlichen Turbinengehäuse ausgebildet ist, ist eine Spielpassung mit einem kleinen ringförmigen Spalt zwischen dem Wandungselement 12 und der Leitschaufel 18 vorgesehen. Durch den ringförmigen Spalt dieser Spielpassung kann beispielsweise ein Teil der Kühlluft aus dem Hohlraum 44 in die den Heißgas- bzw. Strömungskanal 14 austreten. Bei Bedarf kann jedoch auch ein hier nicht darstelltes Dichtelement an diesem Ringspalt vorgesehen sein, um eine Leckageströmung zumindest weitgehend zu verhindern.

Weiterhin umfasst das Gehäuse 10 eine Druckableitung 50, mittels welcher ein Druck in dem Hohlraum 44 durch Abblassen von Fluid verringert werden kann. Beispielsweise kann die Druckableitung 50 in die Umgebung führen und damit in dem Hohlraum 44 vorhandene Druckluft abblasen. Bei einem reduzierten Druck in dem Hohlraum 44 wird das Wandungselement 12 durch die Druckdifferenz zwischen dem Druck im Hohlraum 44 und einem Druck im Strömungskanal 14 radial nach außen gedrückt, sodass es in die Offenstellung bewegt wird. Alternativ kann diese Bewegung auch durch ein Federelement bewirkt und/oder unterstützt werden.

Die Druckableitung 50 umfasst ein schaltbares Ventil 52, mittels welchem der Druck steuerbar oder regelbar ist. Das schaltbare Ventil 52 ist in Fig. 1 lediglich symbolisch dargestellt. Durch ein Schließen des schaltbaren Ventils 52 kann der Druck in dem Hohlraum 44 erhöht werden, indem Druckluft durch die Druckzuleitung 48 in den Hohlraum 44 strömt und nicht durch die durch das Ventil 52 verschlossene Druckableitung 50 entweichen kann. Sobald der Druck im Hohlraum 44 den Druck im Strömungskanal 14 übersteigt, wird das Wandungselement 12 in die Dichtstellung bewegt. Wenn das schaltbare Ventil 52 geöffnet wird, strömt Druckluft aus dem Hohlraum 44 über die Druckableitung 50 heraus. Sobald der Druck im Hohlraum 44 kleiner geworden ist als der Druck im Strömungskanal 14, wird das Wandungselement 12 damit in die Offenstellung bewegt und gibt den Fahnenspalt 38 frei, sodass die Leitschaufel 18 verstellt werden kann, ohne dass es zur Verschleiß durch Reibung mit dem Wandungselement 12 kommt. Mithilfe des Ventils 52 kann also das Wandungselement 12 während des Betriebs der Gasturbine bedarfsgerecht zwischen der Dichtstellung und der Offenstellung bewegt werden. Vorzugsweise wird dabei der Druck in dem Hohlraum 44 nur kurzzeitig, d.h. weniger als 10 Sekunden, vorzugsweise weniger als 2 Sekunden, weiter bevorzugt weniger als 2 Sekunden, unter den Druck im Strömungskanal 14 gesenkt, nämlich im Wesentlichen nur so lange, wie die Verstellung der Leitschaufel 18 an Zeit benötigt. Hierdurch wird verhindert, dass das Turbinengehäuse während dieser Zeit durch Heißgaseinzug und fehlender Zufuhr von Kühlluft überhitzt.

Dabei ist zu erkennen, dass ein Abblasskanal 54 der Druckableitung 50 einen größeren Querschnitt 56 aufweist als ein Zugangskanal 58 der Druckzuleitung. Der Querschnitt des Zugangskanals 58 ist in Fig. 2 mit dem Bezugszeichen 60 gekennzeichnet. Der größere Querschnitt 56 des Abblasskanals 54 ermöglicht dabei ein schnelleres Abströmen von Druckluft aus dem Hohlraum 44, als durch den Zugangskanal 58 nachströmen kann. Alternativ oder zusätzlich kann natürlich auch die Druckzuleitung 48 ein schaltbares Ventil umfassen.

Die Druckzuleitung 48 beziehungsweise deren Querschnitt 60 ist vorzugsweise so groß gewählt, dass sich zwischen dem Zuströmen von Druckluft in den Hohlraum 44 und einem Abströmen durch Leckagen im Gehäuse 10 ein Gleichgewicht einstellt. Das heißt, es strömt bei einem geschlossenen Ventil 52 gerade soviel Druckluft nach, das im Hohlraum 44 ein im Wesentlichen konstanter Druck gewährleistet wird, welcher das Wandungselement 12 in der Dichtstellung hält. Daher sollte die Zufuhr des unter Druck stehenden Fluids derart gewählt sein, dass nicht so viel Druck durch Leckagen aus dem Hohlraum 44 entweicht, dass sich das Wandungselement 12 ungewollt in die Offenstellung bewegt. Ebenso sollte es nicht zu einer unzulässigen Erhöhung des Drucks im Hohlraum 44 kommen. Hierzu kann ein Überdruckventil bzw. eine entsprechende Überdruckbegrenzung durch das Ventil 52 vorgesehen sein.

Weiterhin zu erkennen ist, dass das Wandungselement 12 eine einseitige Lagerung 62 am Gehäuseelement 42 aufweist. Hierfür ist ein Nasenelement 64 des Wandungselements 12 in eine Nut 66 des Gehäuseelements 42 eingeschoben. In der Offenstellung wird das Wandungselement 12 an seiner der Lagerung 62 abgewandten Seite 68 in Bezug auf den Strömungskanal 14 radial nach außen verschwenkt bzw. gebogen. In der Dichtstellung wird das Wandungselement 12 im Gegensatz dazu an der Seite 68 radial in Richtung des Strömungskanals 14 verschwenkt bzw. gebogen. Alternativ kann das Wandungselement 12 auch drehbar an einem Gelenk an der Lagerung 62 gehalten sein.

Weiterhin zu erkennen ist, dass das Wandungselement 12 an der der Lagerung 62 abgewandten Seite 68 die größte Relativbewegung zu dem Gehäuseelement 42 bei einer Bewegung zwischen der Dichtstellung und der Offenstellung durchführt. Dabei wird ein Spalt zwischen dem Wandungselement 12 und dem Gehäuseelement 42 freigegeben. Um hier unnötige Druckverluste im Strömungskanal 14 zu vermeiden, welche zu einem erhöhten Treibstoffverbrauch führen könnten, und um den Einzug größerer Mengen von Heißgas in den Hohlraum 44 zu vermeiden, ist an dieser Stelle ein Dichtungselement 70 angeordnet. Bei der Bewegung des Wandungselements 12 gleitet dieses an dem Dichtungselement 70 entlang.

In Fig. 2 ist ebenfalls zu erkennen, dass das Wandungselement 12 eine Öffnung 72 umfasst, in welcher ein Schaufelteller 74 der Leitschaufel 18 angeordnet ist. Wie zuvor bereits erwähnt, ist zwischen dem Schaufelteller 74 und der Öffnung 72 eine Spielpassung, beispielsweise in Form eines kleinen ringförmigen Spalts, vorgesehen, welche ein Drehen der Leitschaufel 18 um die Drehachse D2 ermöglicht und Druckverluste im Strömungskanal 14 weitgehend reduziert.

Man erkennt, dass eine den Strömungskanal 14 begrenzende Fläche 76 des Wandungselements 12 und der Schaufelteller 74 in der Dichtstellung bündig aneinander anschließen. Das heißt, das Wandungselement 12 und der Schaufelteller 74 begrenzen den Strömungskanal 14 in radial äußerer Richtung mit einer aerodynamisch gleichförmigen Fläche, sodass ein Induzieren von Wirbeln oder anderer unerwünschter aerodynamischer Erscheinungen in der Gasströmung im Strömungskanal 14 vermieden wird.

Durch das in die Dichtstellung bewegte Wandungselement 12 ist die Leitschaufel 18 reibschlüssig an dieser festgelegt. Damit ist die Leitschaufel 18 verdrehsicher am Wandungselement 12 gehalten, sodass auf zusätzliche Elemente zum Festlegen der Leitschaufel 18 vorteilhaft verzichtet werden kann.

Weiterhin ist zu erkennen, dass an dem Gehäuse 10 ein Anschlagelement 78 zur Begrenzung der Bewegung des Wandungselements 12 in die Offenstellung sowie ein Anschlagelement 80 zur Begrenzung der Bewegung des Wandungselements 12 in die Dichtstellung vorgesehen ist. Das Anschlagelement 78 des Gehäuses 10 ist dabei als ein Nasenelement ausgebildet. Ein korrespondierendes Nasenelement 82 des Wandungselements 12 liegt in Offenstellung an dem Anschlagelement 78 an. Damit wird besonders zuverlässig verhindert, dass das Wandungselement 12 durch einen zu hohen Druckunterschied zwischen dem Strömungskanal 14 und dem Hohlraum 44 in der Offenstellung zu weit radial nach außen gebogen wird und dadurch entweder selbst beschädigt wird oder das Gehäuseelement 42 beschädigt. Das Anschlagelement 80 ist als Kante in dem Gehäuseelement 42 ausgebildet, auf welchem ein korrespondierendes Nasenelement 84 des Wandungselements 12 in Dichtstellung zur Anlage kommen kann. Hierdurch wird verhindert, dass sich das Wandungselement 12 unzulässig weit radial nach innen bewegt oder verbiegt. Zudem wird auch das Schaufelblatt 30 vor Beschädigungen durch eine übermäßige Bewegung des Wandungselements 12 geschützt.

Die gezeigte Gasturbine beziehungsweise das gezeigte Flugtriebwerk wird wie folgt betrieben: Sobald ein Betriebszustand vorliegt, welcher ein Verstellen der Leitschaufel 18 erfordert, wird das Wandungselement 12 aus der Dichtstellung in die Offenstellung bewegt. Zu diesem Zweck wird das schaltbare Ventil 52 geöffnet und Druckluft strömt über die Druckableitung 50 aus dem Hohlraum 44 heraus. Damit reduziert sich der auf das Wandungselement 12 wirkende Druck in dem Hohlraum 44. Aufgrund des herrschenden Drucks in dem Strömungskanal 14 wird das Wandungselement 12 in die Offenstellung bewegt beziehungsweise verbogen und gibt damit den Fahnenspalt 38 frei. Somit kann die Leitschaufel 18 mittels der Einstelleinrichtung um die Drehachse D2 gedreht werden, bis eine optimale Anströmung der Turbinenschaufel 20 für den betreffenden Betriebspunkt eingestellt ist. Sobald die Leitschaufel 18 in die richtige Position verstellt beziehungsweise verdreht wurde, wird das schaltbare Ventil 52 wieder verschlossen. Durch die Druckzuleitung 48 in den Hohlraum 44 strömende Druckluft übt einen Druck auf das Wandungselement 12 aus, welcher radial von außen aus dem Hohlraum 44 auf das Wandungselement 12 wirkt. Entsprechend wird das Wandungselement 12 wieder in die Dichtstellung zurückbewegt bzw. -gebogen und der Fahnenspalt 38 zumindest größtenteils geschlossen. Durch den Fahnenspalt 38 und gegebenenfalls andere Spalte während der Verstellbewegung des Wandungselements 12 und der Leitschaufeln 18 treten damit nur kurzzeitige Verluste auf, welche für den Treibstoffverbrauch über die gesamte Flugdauer des Flugzeugs, Helikopters oder dergleichen vernachlässigbar sind. Dagegen werden während des restlichen Betriebs der Gasturbine beziehungsweise des Flugtriebwerks äußere Verluste im Strömungskanal 14 nahezu vollständig vermieden, was einen deutlichen Wirkungsgradgewinn zur Folge hat.

Es sei noch angemerkt, dass das Wandungselement 12 gegenüber ihm in Umfangsrichtung benachbarten weiteren Wandungselementen, die identisch zu dem Wandungselement 12 ausgebildet sein können, zum Beispiel mittels nicht dargestellter Dichtbleche, die in entsprechenden Dichtnuten des Wandungselements 12 vorgesehen sind abgedichtet sein kann, wie dies aus dem Stand der Technik hinlänglich bekannt ist. Hierdurch kann ein hoher Grad an Dichtigkeit zwischen den in Umfangsrichtung benachbarten Wandungselementen sowohl in der Dichtstellung als auch in der Offenstellung und beim Übergang zwischen diesen Stellungen erzielt werden. Vorzugsweise werde alle Verstellleitschaufeln zeitgleich verstellt, so dass auch alle ihnen zugeordneten Wandungselemente 12 zeitgleich von der Dichtstellung in die Offenstellung und zurück überführt werden.

### Bezugszeichenliste

- 10: Gehäuse
- 12: Wandungselement
- 14: Strömungskanal
- 16: Rotor
- 18: Leitschaufel
- 20: Turbinenschaufel
- 22: Dichtungselement
- 24: Schaft
- 26: Wälzlagerung
- 28: Schaftelement
- 30: Schaufelblatt
- 32: Pfeile
- 36: Hebel
- 38: Spalt
- 40: Seite
- 42: Gehäuseelement
- 44: Hohlraum
- 46: Bohrung
- 48: Druckzuleitung
- 50: Druckableitung
- 52: Ventil
- 54: Abblasskanal
- 56: größerer Querschnitt
- 58: Zugangskanal
- 60: kleinerer Querschnitt
- 62: Lagerung
- 64: Nasenelement
- 66: Nut
- 68: Seite
- 70: Dichtungselement
- 72: Öffnung
- 74: Schaufelteller
- 76: Fläche
- 78: Anschlagelement
- 80: Anschlagelement
- 82: Nasenelement
- 84: Nasenelement
- D: Drehachse Rotor
- D2: Drehachse Leitschaufel

## Patentansprüche

1. Gehäuse (10) für eine Gasturbine, an welchem wenigstens ein Wandungselement (12) beweglich gelagert ist, das einen Strömungskanal (14) des Gehäuses (10) in radialer Richtung einer Drehachse (D) eines Rotors (16) der Gasturbine nach außen hin begrenzt, wobei das Gehäuse (10) wenigstens eine variabel einstellbare Leitschaufel (18) umfasst, die sich durch das Wandungselement (12) in den Strömungskanal (14) erstreckt,
wobei das Wandungselement (12) zwischen einer Dichtstellung, in welcher das Wandungselement (12) zumindest an einem Teilbereich einer dem Wandungselement zugewandten Seite (40) eines Schaufelblatts (30) der Leitschaufel (18) anliegt, und einer Offenstellung, in welcher das Schaufelblatt (30) und das Wandungselement (12) voneinander beabstandet sind, bewegbar ist,
**dadurch gekennzeichnet, dass**
das Wandungselement (12) zum Bewegen zwischen der Offenstellung und der Dichtstellung mit einem unter Druck stehenden Fluid beaufschlagbar ist.

2. Gehäuse (10) nach Anspruch 1,
**dadurch gekennzeichnet, dass**
dieses eine Druckzuleitung (48) zum Zuführen des unter Druck stehenden Fluids und eine Druckableitung (50) zum Abführen des unter Druck stehenden Fluids umfasst.

3. Gehäuse (10) nach einem Anspruch 2,
**dadurch gekennzeichnet, dass**
die Druckzuleitung (48) und/oder die Druckableitung (50) ein Ventil (52) umfasst, mittels welchem der Druck auf das Wandungselement (12) steuerbar und/oder regelbar ist.

4. Gehäuse (10) nach Anspruch 2 oder 3,
**dadurch gekennzeichnet, dass**
ein Abblasskanal (54) der Druckableitung (50) einen größeren Querschnitt (56) aufweist als ein Zuführkanal (58) der Druckzuleitung (48).

5. Gehäuse (10) nach einem Anspruch 1 bis 4,
**dadurch gekennzeichnet, dass**
das Wandungselement (12) über eine Lagerung (62) einseitig an einem Gehäuseelement (42) gehalten ist.

6. Gehäuse (10) nach einem Anspruch 1 bis 5,
**dadurch gekennzeichnet, dass**
zwischen dem Wandungselement (12) und einem angrenzenden Gehäuseelement (42) wenigstens ein Dichtungselement (70) angeordnet ist.

7. Gehäuse (10) nach einem Anspruch 5 und 6,
**dadurch gekennzeichnet, dass**
das Dichtungselement (70) an einer der Lagerung (62) gegenüberliegenden Seite (68) des Wandungselements (12) angeordnet ist.

8. Gehäuse (10) nach einem Anspruch 1 bis 7,
**dadurch gekennzeichnet, dass**
eine den Strömungskanal (14) begrenzende Fläche (76) des Wandungselements (12) und ein Schaufelteller (74) der Leitschaufel (18) in der Dichtstellung zumindest im Wesentlichen bündig aneinander anschließen.

9. Gehäuse (10) nach einem Anspruch 1 bis 8,
**dadurch gekennzeichnet, dass**
das Wandungselement (12) eine Öffnung (72) umfasst, in welcher ein Schaufelteller (74) der Leitschaufel (18) angeordnet ist.

10. Gehäuse (10) nach Anspruch 1 bis 9,
**dadurch gekennzeichnet, dass**
das Wandungselement (12) und die Leitschaufel (18) in der Dichtstellung reibschlüssig aneinander festgelegt sind.

11. Gehäuse (10) nach Anspruch 1 bis 10,
**dadurch gekennzeichnet, dass**
dieses wenigstens ein Anschlagelement (78, 80) umfasst, welches die Bewegung des Wandungselements (12) in die Dichtstellung und/oder in die Offenstellung begrenzt.

12. Gasturbine, insbesondere Flugtriebwerk, mit einem Gehäuse (10) nach einem der Ansprüche 1 bis 11.

13. Verfahren zum Betreiben einer Gasturbine mit einem Gehäuse (10) nach einem der Ansprüche 1 bis 11, bei welchem das Wandungselement (12) zwischen der Dichtstellung und der Offenstellung durch Beaufschlagung mit einem unter Druck stehenden Fluid bewegt wird.

14. Verfahren nach Anspruch 13,
durch folgende Schritte gekennzeichnet:
- Bewegen des Wandungselements (12) in die Offenstellung;
- Verstellen der Leitschaufel (18); und
- Bewegen des Wandungselements (12) in die Dichtstellung.

## Claims

1. Housing (10) for a gas turbine, on which at least one wall element (12) is movably mounted which outwardly delimits a flow channel (14) of the housing (10) in the radial direction of an axis of rotation (D) of a rotor (16) of the gas turbine, the housing (10) comprising at least one variably adjustable guide vane (18) which extends through the wall element (12) into the flow channel (14), the wall element (12) being movable between a sealing position in which the wall element (12) abuts at least one subregion of a side (40) of an airfoil (30) of the guide vane (18) that faces the wall element, and an open position in which the airfoil (30) and the wall element (12) are mutually spaced, **characterized in that** the wall element (12) can be acted upon by a pressurized fluid in order to move between the open position and the sealing position.

2. Housing (10) according to claim 1, **characterized in that** said housing comprises a pressure feed line (48) for supplying the pressurized fluid and a pressure discharge line (50) for removing the pressurized fluid.

3. Housing (10) according to claim 2, **characterized in that** the pressure feed line (48) and/or the pressure discharge line (50) comprises a valve (52) by means of which the pressure on the wall element (12) can be controlled in an open and/or closed loop.

4. Housing (10) according to either claim 2 or claim 3, **characterized in that** a drain-off channel (54) of the pressure discharge line (50) has a larger cross section (56) than a supply channel (58) of the pressure feed line (48).

5. Housing (10) according to any of claims 1 to 4, **characterized in that** the wall element (12) is held on one side on a housing element (42) by means of a support (62).

6. Housing (10) according to any of claims 1 to 5, **characterized in that** at least one sealing element (70) is arranged between the wall element (12) and an adjacent housing element (42).

7. Housing (10) according to either claim 5 or claim 6, **characterized in that** the sealing element (70) is arranged on a side (68) of the wall element (12) that is opposite the support (62).

8. Housing (10) according to any of claims 1 to 7, **characterized in that** a surface (76) of the wall element (12) that delimits the flow channel (14) and a vane plate (74) of the guide vane (18) adjoin one another so as to be at least substantially flush in the sealing position.

9. Housing (10) according to any of claims 1 to 8, **characterized in that** the wall element (12) comprises an opening (72) in which a vane plate (74) of the guide vane (18) is arranged.

10. Housing (10) according to any of claims 1 to 9, **characterized in that** the wall element (12) and the guide vane (18) are frictionally secured to one another in the sealing position.

11. Housing (10) according to any of claims 1 to 10, **characterized in that** said housing comprises at least one stop element (78, 80) which limits the movement of the wall element (12) into the sealing position and/or into the open position.

12. Gas turbine, in particular an aircraft engine, comprising a housing (10) according to any of claims 1 to 11.

13. Method for operating a gas turbine comprising a housing (10) according to any of claims 1 to 11, in which the wall element (12) is moved between the sealing position and the open position by being acted upon by a pressurized fluid.

14. Method according to claim 13, **characterized by** the following steps:
- moving the wall element (12) into the open position;
- adjusting the guide vane (18); and
- moving the wall element (12) into the sealing position.

## Revendications

1. Carter (10) pour une turbine à gaz, sur lequel au moins un élément de paroi (12) est monté de manière mobile, lequel élément de paroi délimite un conduit d'écoulement (14) du carter (10) vers l'extérieur dans la direction radiale d'un axe de rotation (D) d'un rotor (16) de la turbine à gaz, le carter (10) comprenant au moins une aube directrice (18) réglable de manière variable, qui s'étend à travers l'élément de paroi (12) dans le conduit d'écoulement (14), l'élément de paroi (12) étant mobile entre une position d'étanchéité dans laquelle l'élément de paroi (12) repose au moins sur une zone partielle d'un côté (40) d'une pale (30) de l'aube directrice (18), lequel côté est orienté vers l'élément de paroi,, et une position ouverte dans laquelle la pale (30) et l'élément de paroi (12) sont espacés l'un de l'autre, **caractérisé en ce que** l'élément de paroi (12) peut être sollicité par un fluide sous pression pour se déplacer entre la position ouverte et la position d'étanchéité.

2. Carter (10) selon la revendication 1, **caractérisé en ce qu'**il comprend une conduite d'amenée de pression (48) pour l'amenée du fluide sous pression et une conduite d'évacuation de pression (50) pour l'évacuation du fluide sous pression.

3. Carter (10) selon la revendication 2, **caractérisé en ce que** la conduite d'amenée de pression (48) et/ou la conduite d'évacuation de pression (50) comprend une soupape (52) au moyen de laquelle la pression sur l'élément de paroi (12) peut être commandée et/ou réglée.

4. Carter (10) selon la revendication 2 ou 3, **caractérisé en ce qu'**un canal d'échappement (54) de la conduite d'évacuation de pression (50) comporte une section transversale (56) plus grande qu'un canal d'amenée (58) de la conduite d'amenée de pression (48).

5. Carter (10) selon l'une des revendications 1 à 4, **caractérisé en ce que** l'élément de paroi (12) est maintenu d'un côté au niveau d'un élément de carter (42) par l'intermédiaire d'un support (62).

6. Carter (10) selon la revendication 1 à 5, **caractérisé en ce qu'**au moins un élément d'étanchéité (70) est disposé entre l'élément de paroi (12) et un élément de carter (42) adjacent.

7. Carter (10) selon les revendications 5 et 6, **caractérisé en ce que** l'élément d'étanchéité (70) est disposé sur un côté (68) de l'élément de paroi (12) opposé au support (62).

8. Carter (10) selon les revendications 1 à 7, **caractérisé en ce qu'**une surface (76) de l'élément de paroi (12) délimitant le conduit d'écoulement (14) et une plaque de pale (74) de l'aube directrice (18) se rejoignent au moins sensiblement à fleur dans la position d'étanchéité.

9. Carter (10) selon les revendications 1 à 8, **caractérisé en ce que** l'élément de paroi (12) comprend une ouverture (72) dans laquelle une plaque de pale (74) de l'aube directrice (18) est disposée.

10. Carter (10) selon les revendications 1 à 9, **caractérisé en ce que** l'élément de paroi (12) et l'aube directrice (18) sont fixés par friction l'un à l'autre dans la position d'étanchéité.

11. Carter (10) selon les revendications 1 à 10, **caractérisé en ce qu'**il comprend au moins un élément de butée (78, 80) qui limite le déplacement de l'élément de paroi (12) dans la position d'étanchéité et/ou dans la position ouverte.

12. Turbine à gaz, notamment moteur d'avion, comportant un carter (10) selon l'une des revendications 1 à 11.

13. Procédé de fonctionnement d'une turbine à gaz comportant un carter (10) selon l'une des revendications 1 à 11, dans lequel l'élément de paroi (12) est déplacé entre la position d'étanchéité et la position ouverte par sollicitation par un fluide sous pression.

14. Procédé selon la revendication 13, **caractérisé par** les étapes suivantes :
- déplacement de l'élément de paroi (12) dans la position ouverte ;
- réglage de l'aube directrice (18) ; et
- déplacement de l'élément de paroi (12) dans la position d'étanchéité.
